(19) 
Europäisches
Patentamt
European
Patent Office
Office européen
des brevets

(11) **EP 2 157 711 A1**

(12) **EUROPEAN PATENT APPLICATION**
published in accordance with Art. 153(4) EPC

(43) Date of publication:
**24.02.2010 Bulletin 2010/08**

(21) Application number: **08861711.3**

(22) Date of filing: **09.12.2008**

(51) Int Cl.:
**H04B 10/02** (2006.01)

(86) International application number:
**PCT/CN2008/073403**

(87) International publication number:
**WO 2009/076888 (25.06.2009 Gazette 2009/26)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **14.12.2007 CN 200710160976**

(71) Applicant: **Huawei Technologies Co., Ltd.
Longgang District
Shenzhen
Guangdong 518129 (CN)**

(72) Inventors:
• **YANG, Yanfu
  Shenzhen
  Guangdong 518129 (CN)**
• **XU, Xiaogeng
  Shenzhen
  Guangdong 518129 (CN)**

(74) Representative: **Kreuz, Georg Maria
Huawei Technologies
Riesstrasse 25
80992 München (DE)**

(54) **OPTICAL TRANSMISSION SYSTEM, APPARATUS AND METHOD**

(57)  An optical transmission system, an optical transmitting apparatus, an optical transmitting method, an optical receiving apparatus, and an optical receiving method are provided, which belong to an optical communication field. The system includes a transmitting end apparatus and a receiving end apparatus. The optical transmitting apparatus includes a pre-coding module, a multiplexing module, and a modulating module. The optical receiving apparatus includes a demodulating module and a converting module. The optical transmitting method includes the following steps: performing pre-coding, multiplexing, and modulation for a signal to be transmitted, and then outputting the signal. The optical receiving method includes the following steps: receiving an optical signal of a transmitted signal; demodulating the optical signal according to a preset time delay, where the preset time delay equals to a product of a number of branches multiplexed by a transmitting apparatus and an element period of a signal multiplexed by the transmitting apparatus; converting the demodulated optical signal into an electrical signal; and obtaining information of the transmitted signal according to the electrical signal. Thus, the existing low-speed parts are adopted to realize a high-speed pre-coding function in a high-speed optical transmission system, and an extended time delay is used in the demodulation, thereby reducing the cost and difficulty to realize the system.

FIG. 9

**Description**

**CROSS-REFERENCE TO RELATED APPLICATION**

The application claims the benefit of priority to Chinese Patent Application No. 200710160976.5, filed on December 14, 2007, and entitled "OPTICAL TRANSMISSION SYSTEM, APPARATUS AND METHOD", which is incorporated herein by reference in its entirety.

**FIELD OF THE TECHNOLOGY**

The present invention relates to an optical communication field, and more particularly to an optical transmission system, an optical transmitting apparatus, an optical receiving apparatus, an optical transmitting method, and an optical receiving method.

**BACKGROUND OF THE INVENTION**

With the increase of video services in the network, higher demands on the capacity of the entire network are put forward. The current rate of the optical network is mainly 10 Gb/s, so that it is necessary to upgrade the rate of the optical network, and the rate of the optical network in the next generation is 40 Gb/s and even higher rate. The rate of Ethernet is upgraded to ten times of the current rate, for example, 100 Gigabit Ethernet (GE). The 100 Gb/s optical transmission technique has become a hot spot nowadays.

In the optical transmission system, the optical modulation format is critical for the entire system. The selection of the modulation format is directly associated with the characteristics of the optical transmission system, such as transmission performance, spectrum efficiency, nonlinear tolerance, and dispersion tolerance. The 10 Gb/s optical transmission system mainly uses non-return to zero (NRZ) as a main modulation format. The 40 Gb/s optical transmission system has a plurality of optical modulation formats, such as NRZ, return to zero (RZ), carrier-suppressed return to zero (CSRZ), optical doubinary (ODB), return to zero doubinary (DRZ), and differential quadrature phase shift keying (DQPSK). The 100 Gb/s optical transmission system has a plurality of optical modulation formats, such as DQPSK, vestigal side band (VSB), NRZ, and ODB. Due to having a smooth spectrum, large nonlinear tolerance, and large dispersion tolerance, the optical modulation format such as differential phase shift keying (DPSK) or DQPSK has become an alternative solution for the 40 Gb/s and 100 Gb/s systems.

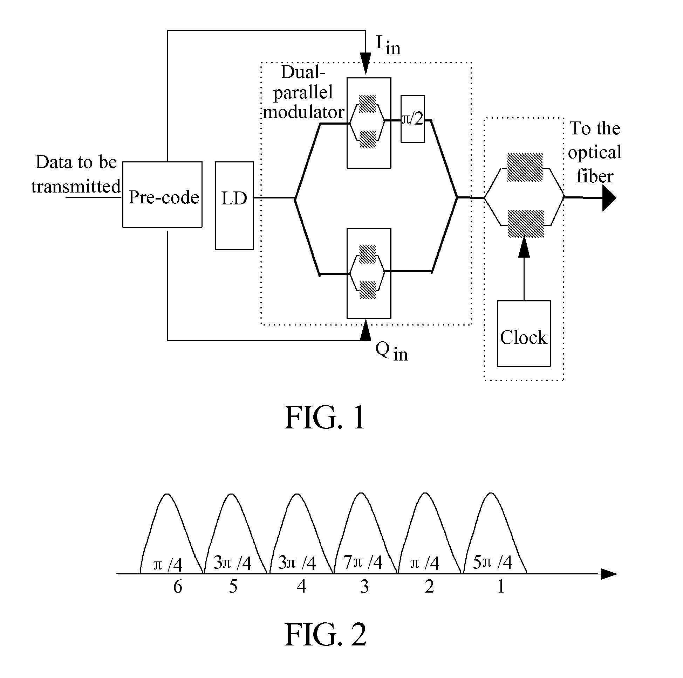

In the DPSK and DQPSK systems in the prior art, adjacent pulse phases are compared to obtain correct information of the transmitted data. At first, illustrations are given by taking a 100 Gb/s RZ-DQPSK system as an example. Referring to FIG. 1, data to be transmitted is pre-coded at a transmitting end of the RZ-DQPSK system and is split into two signals. One signal is an $I_{in}$ signal and is input to one arm of a dual-parallel modulator, and the other signal is a $Q_{in}$ signal and is input to the other arm of the dual-parallel modulator. After being modulated by the dual-parallel modulator, an optical signal emitted from a laser diode (LD) is turned into a DQPSK optical modulated signal that carries a transmitted data signal. The DQPSK optical signal is turned into an RZ-DQPSK optical pulse signal after passing through an RZ pulse generating unit, and then is input to an optical fiber for transmission. Referring to FIG. 2, there are six optical pulse signals, and phases of the first optical pulse signal to the sixth optical pulse signal are $5\pi/4$, $\pi/4$, $7\pi/4$, $3\pi/4$, $3\pi/4$, and $\pi/4$ respectively. Information of the transmitted data can be obtained by comparing the phase difference between two adjacent optical pulse signals. For example, the fourth optical pulse signal is compared with the fifth optical pulse signal, and the phases thereof are not changed, and the fifth optical pulse signal is compared with the sixth optical pulse signal, the phases thereof are changed and have a $\pi/2$ phase difference. Accordingly, information of two corresponding bits in the transmitted data can be obtained.

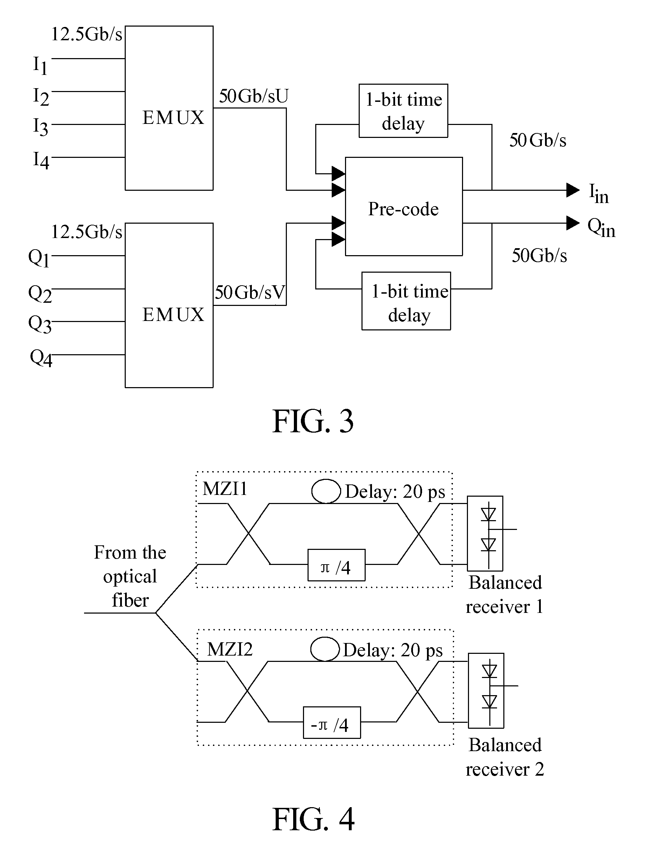

The pre-coding portion is a critical portion of the DQPSK optical transmission system, including multiplexing and pre-coding functions. Referring to FIG. 3, illustrations are given by taking a process of multiplexing eight 12.5 Gb/s signals into a 100 Gb/s signal as an example. Four 12.5 Gb/s signals, namely, $I_1$, $I_2$, $I_3$, and $I_4$, are multiplexed into a 50 Gb/s signal U by an electrical multiplexer (EMUX), and four 12.5 Gb/s signals, namely, $Q_1$, $Q_2$, $Q_3$, and $Q_4$, are multiplexed into a 50 Gb/s signal V by an EMUX. The signals U and V respectively represent an in-phase bit component and a quadrature phase bit component. Then, the 50 Gb/s U and V signals are pre-coded, so that the finally coded 50 Gb/s $I_{in}$ and $Q_{in}$ signals are obtained and then input into the dual-parallel modulator. The pre-coding rules for the 50 Gb/s signals U and V are listed as follows.

$$I_k = \overline{(Q_{k-1} \oplus I_{k-1})}(U_k \oplus I_{k-1}) + (Q_{k-1} \oplus I_{k-1})\overline{(V_k \oplus I_{k-1})}$$

$$Q_k = \overline{(Q_{k-1} \oplus I_{k-1})} \, \overline{(V_k \oplus I_{k-1})} + (Q_{k-1} \oplus I_{k-1})(U_k \oplus I_{k-1})$$

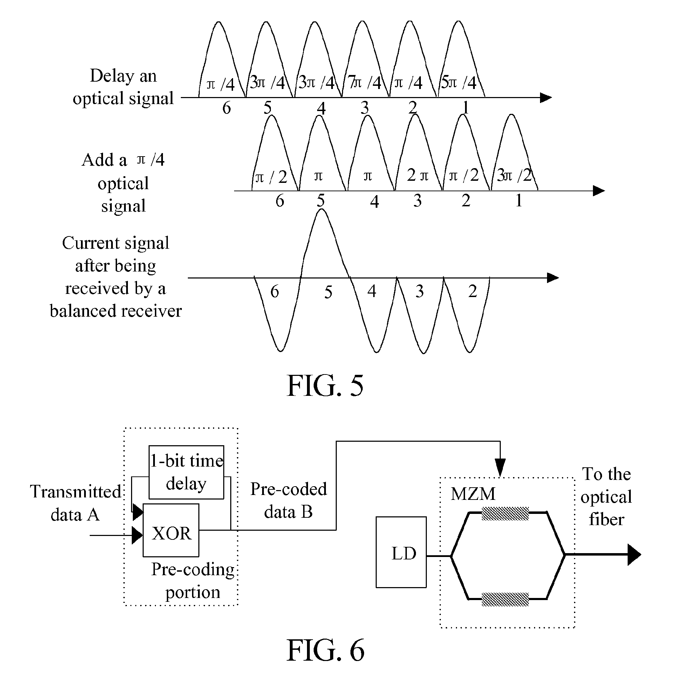

The subscript in the formulas represents a time position of the bit sequence. ⊕ represents exclusive-OR, and ‾ represents negation. The optical signals modulated by the dual-parallel modulator are converted into optical pulse signals, and then transmitted to a receiving end via the optical fiber for transmission. Referring to FIG. 4, each RZ-DQPSK optical signal from the optical fiber converts the differential phase information into intensity information by a Mach-Zender interferometer (MZI), and the converted optical signal is further converted into an electrical signal after being received by a balanced receiver. Since the adjacent pulse phase variation in the RZ-DQPSK system carries data information, the MZI delays one channel in the transmitted signal for one element period, where the element period is an element period of the signal after being multiplexed at a transmitting end apparatus, for example, 20 ps in the 100 Gb/s RZ-DQPSK system, and the MZI adds a certain phase variation to the other channel. Specifically, a π/4 phase variation is added to the second channel optical signal in the MZI1, and a -π/4 phase variation is added to the second channel optical signal in the MZI2. Referring to FIG. 5, the MZI1 performs a time delay on the first channel optical signal for one element period, and adds a π/4 optical signal to the second channel optical signal, and then after the optical signals are received by a balanced receiver 1, a current signal is obtained, so that the information of the transmitted data is obtained.

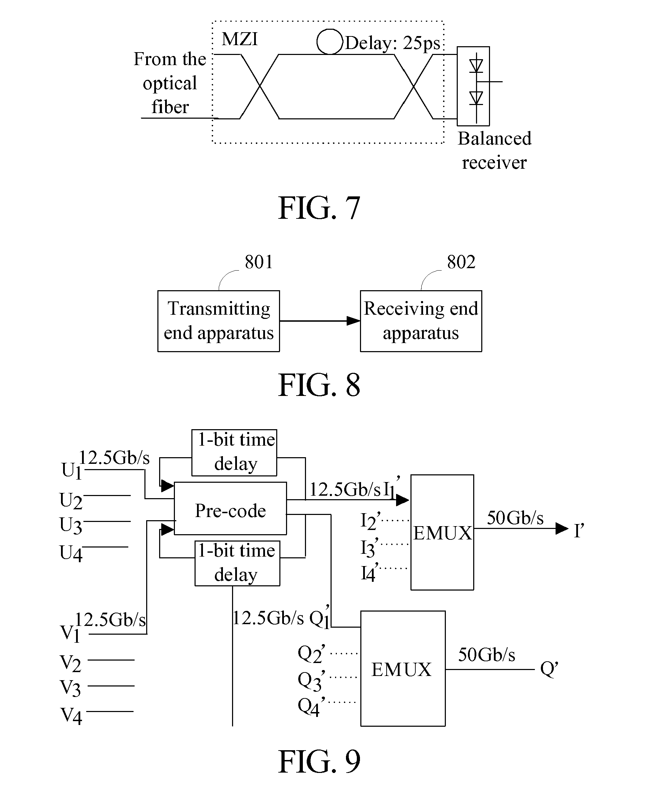

Illustrations are given as follows by taking a 40 Gb/s DPSK system as an example. Referring to FIG. 6, the transmitted data A is pre-coded at the transmitting end to generate pre-coded data B. Alternatively, the transmitted data may be multiplexed first, and then pre-coded (the multiplexer is not shown in the Figure). The pre-coding portion in the DPSK system is mainly formed by one Exclusive-OR (XOR) gate and one 1-bit delayer. Two channel input data of the XOR come from the transmitted data A and the pre-coded data B after being delayed by the 1-bit delayer. The pre-coded data B is input to the optical fiber after being modulated by a Mach-Zender modulator (MZM), and is transmitted to the receiving end by the optical fiber. Referring to FIG. 7, at the receiving end, the signal transmitted from the optical fiber is demodulated by the MZI. Since the adjacent pulse phase variation in the DPSK system carries data information, the MZI delays one channel signal in the transmitted signal for 1 bit rate, that is, 25 ps in the 40 Gb/s DPSK system. The optical signal converted by the MZI is further converted into an electrical signal after being received by the balanced receiver, so that the information of the transmitted data is obtained.

In the process of implementing the present invention, the inventors found that the prior art at least has the following disadvantages.

The pre-coding portion in the RZ-DQPSK system or DPSK system needs to adopt high-speed parts to achieve the time delay of one element period, thereby completing the pre-coding function. For example, in the 100 Gb/s system, the pre-coding portion is required to adopt 50 Gb/s electrical logic parts, which has a high requirement for hardware, and has a strict requirement for the technology implementation. Furthermore, it requires high-speed pre-coding parts during implementation instead of low-speed pre-coding parts, which results in a large waste of the cost.

## SUMMARY OF THE INVENTION

Accordingly, the present invention is directed to an optical transmission system, an optical transmitting apparatus, an optical receiving apparatus, an optical transmitting method, and an optical receiving method, which are applicable to reduce the requirements for hardware during optical transmission. The technical solutions are described as follows.

In an embodiment, the present invention provides an optical transmission system, which includes a transmitting end apparatus and a receiving end apparatus.

The transmitting end apparatus is configured to pre-code a signal to be transmitted, multiplex data obtained through pre-coding, modulate a multiplexed signal, and output a modulated optical signal, where non-adjacent optical pulse signals in the modulated optical signal carry information of the signal to be transmitted.

The receiving end apparatus is configured to receive an optical signal output by the transmitting end apparatus, demodulate the optical signal according to a preset time delay, convert the demodulated optical signal into an electrical signal, and obtain information of the signal to be transmitted according to the electrical signal; where the preset time delay is a product of the number of branches multiplexed by the transmitting end apparatus and an element period of the signal after being multiplexed by the transmitting end apparatus.

In another embodiment, the present invention further provides an optical transmitting apparatus, which includes a pre-coding module, a multiplexing module, and a modulating module.

The pre-coding module is configured to pre-code a signal to be transmitted.

The multiplexing module is configured to multiplex data obtained by the pre-coding module.

The modulating module is configured to modulate the signal multiplexed by the multiplexing module and output the modulated optical signal, where non-adjacent optical pulse signals in the modulated optical signal carry information of the signal to be transmitted.

Furthermore, in yet another embodiment, the present invention further provides an optical receiving apparatus, which includes a demodulating module and a converting module.

The demodulating module is configured to demodulate an optical signal of a transmitted signal received by the apparatus according to a preset time delay, where the preset time delay is a product of the number of branches multiplexed by a transmitting apparatus that sends the transmitted signal and an element period of the signal multiplexed by the transmitting apparatus.

The converting module is configured to convert the optical signal demodulated by the demodulating module into an electrical signal, and obtain information of the transmitted signal according to the electrical signal.

In another embodiment, the present invention provides an optical transmitting method, which includes the following steps.

A signal to be transmitted is pre-coded, and data obtained through pre-coding is multiplexed.

The multiplexed signal is modulated and the modulated optical signal is output, where non-adjacent optical pulse signals in the modulated optical signal carry information of the signal to be transmitted.

In another embodiment, the present invention further provides an optical receiving method, which includes the following steps.

An optical signal of a transmitted signal is received.

The optical signal is demodulated according to a preset time delay, where the preset time delay is a product of the number of branches multiplexed by a transmitting apparatus that sends the optical signal and an element period of the signal multiplexed by the transmitting apparatus.

The demodulated optical signal is converted into an electrical signal, and information of the transmitted signal is obtained according to the electrical signal.

The beneficial effects of the technical solutions according to the embodiments of the present invention are described as follows.

In the embodiments of the present invention, the transmitting end performs pre-coding first and then performs multiplexing, and the receiving end performs demodulation by taking a product of the element period and the number of branches multiplexed by the transmitting end as a time delay. Thus, the existing low-speed parts are adopted to realize a high-speed pre-coding function in the high-speed optical transmission system, and an extended time delay is used accordingly during the demodulation. Such a solution reduces the difficulty and the cost to realize the system.

## BRIEF DESCRIPTION OF THE DRAWINGS

FIG. 1 is a schematic view of a transmitting end of an RZ-DQPSK system in the prior art;

FIG. 2 is a schematic view of an RZ-DQPSK optical signal at the transmitting end of the RZ-DQPSK system in the prior art;

FIG. 3 is a schematic view of a pre-coding portion in the transmitting end of the RZ-DQPSK system in the prior art;

FIG. 4 is a schematic view of a receiving end of the RZ-DQPSK system in the prior art;

FIG. 5 is a schematic view of optical signals and an electrical signal at the receiving end of the RZ-DQPSK system in the prior art;

FIG. 6 is a schematic view of a transmitting end of a DPSK system in the prior art;

FIG. 7 is a schematic view of a receiving end of the DPSK system in the prior art;

FIG. 8 is a structural view of an optical transmission system according to a first embodiment of the present invention;

FIG. 9 is a schematic view of pre-coding of a transmitting end apparatus in the optical transmission system according to the first embodiment of the present invention;

FIG. 10 is a schematic view of non-adjacent RZ-DQPSK optical pulse signals obtained by the transmitting end apparatus in the optical transmission system according to the first embodiment of the present invention;

FIG. 11 is a schematic view of a receiving end in the optical transmission system according to the first embodiment of the present invention;

FIG. 12 is a schematic view of demodulation by an MZI1 and conversion of an optical signal into an electrical signal by a balanced receiver 1 in FIG. 11;

FIG. 13 is a schematic view of another transmitting end in the optical transmission system according to the first embodiment of the present invention;

FIG. 14 is a schematic view of another receiving end in the optical transmission system according to the first embodiment of the present invention;

FIG. 15 is a structural view of an optical transmitting apparatus according to a second embodiment of the present invention;

FIG. 16 is a structural view of an optical receiving apparatus according to a third embodiment of the present invention;

FIG. 17 is a flow chart of an optical transmitting method according to a fourth embodiment of the present invention; and

FIG. 18 is a flow chart of an optical receiving method according to a fifth embodiment of the present invention.

## DETAILED DESCRIPTION OF THE EMBODIMENTS

To make the objectives, technical solutions, and advantages of the present invention more comprehensible, the embodiments of the present invention are described as follows in further detail with reference to the accompanying drawings.

The optical transmission system according to an embodiment of the present invention may use a plurality of optical modulation formats, which include, but not limited to, NRZ-DQPSK, RZ-DQPSK, CS-RZ-DQPSK, NRZ-DPSK, RZ-DPSK, and CS-RZ-DPSK.

Embodiment 1

Referring to FIG. 8, in the embodiment, the present invention provides an optical transmission system, which specifically includes a transmitting end apparatus 801 and a receiving end apparatus 802.

The transmitting end apparatus 801 is configured to pre-code a signal to be transmitted, multiplex data obtained through pre-coding, modulate the multiplexed signal, and output the modulated optical signal, where non-adjacent optical pulse signals in the modulated optical signal carry information of the signal to be transmitted; for example, a phase variation between the non-adjacent optical pulse signals in the modulated optical signal carry information of the signal to be transmitted.

The receiving end apparatus 802 is configured to receive an optical signal output by the transmitting end apparatus 801, demodulate the optical signal according to a preset time delay, convert the demodulated optical signal into an electrical signal, and obtain information of the signal to be transmitted according to the electrical signal, where the preset time delay is a product of the number of branches multiplexed by the transmitting end apparatus and an element period of the signal multiplexed by the transmitting end apparatus.

Furthermore, the transmitting end apparatus 801 specifically includes a pre-coding module, a multiplexing module, and a modulating module.

The pre-coding module is configured to pre-code each branch signal of the signal to be transmitted and obtain multiple channel coded data.

The multiplexing module is configured to multiplex the multiple channel coded data obtained by the pre-coding module.

The modulating module is configured to modulate the signal multiplexed by the multiplexing module and output the modulated optical signal, where non-adjacent optical pulse signals in the modulated optical signal carry information of the signal to be transmitted.

The pre-coding and multiplexing operations performed by the transmitting end apparatus 801 according to the embodiment may specifically include: pre-coding each channel signal in multiple channel signals to be transmitted according to a time delay of an element period thereof, obtaining multiple channel coded data, and then multiplexing the obtained multiple channel coded data. For example, referring to FIG. 9, illustrations are given by taking a 100 Gb/s optical transmission system using an RZ-DQPSK optical modulation format as an example. The transmitting end has eight 12.5 Gb/s branch signals to be transmitted, which are respectively $U_1$, $U_2$, $U_3$, $U_4$, $V_1$, $V_2$, $V_3$, and $V_4$. The transmitting

end apparatus respectively performs DQPSK pre-coding for the eight signals to be transmitted, and obtains eight channel 12.5 Gb/s coded data, which are respectively $I_1'$, $I_2'$,

$I_3'$, $I_4'$, $Q_1'$, $Q_2'$, $Q_3'$, and $Q_4'$. A plurality of pre-coding rules exists, and the following rules may be adopted, but it is not limited here.

$$I_k = \overline{(Q_{k-1} \oplus I_{k-1})(U_k \oplus I_{k-1})} + (Q_{k-1} \oplus I_{k-1})\overline{(V_k \oplus I_{k-1})}$$

$$Q_k = \overline{(Q_{k-1} \oplus I_{k-1})(V_k \oplus I_{k-1})} + (Q_{k-1} \oplus I_{k-1})(U_k \oplus I_{k-1})$$

The subscript in the formulas represents a time position of the bit sequence. $\oplus$ represents exclusive-OR, and ‾ represents negation. One EMUX is configured to multiplex the obtained $I_1'$, $I_2'$, $I_3'$, and $I_4'$, so that a signal I' at a rate of 50 Gb/s is obtained after multiplexing. Another EMUX is configured to multiplex the obtained $Q_1'$, $Q_2'$, $Q_3'$, and $Q_4'$, so that a signal Q' at a rate of 50 Gb/s is obtained after multiplexing. The multiplexed signals I' and Q' are input into a modulator to be modulated.

Since the pre-coding is performed prior to the multiplexing process, the pre-coding module of the transmitting end apparatus 801 according to the embodiment may use the existing common low-speed parts to realize the pre-coding function. For example, in the 100 Gb/s optical transmission system using the RZ-DQPSK optical modulation format, the transmitting end has eight 12.5 Gb/s branch signals to be transmitted. Referring to FIG. 3, in the prior art, the multiplexing process is performed first, and then two 50 Gb/s signals are obtained and then pre-coded, so that the pre-coding portion needs to be realized by high-speed parts. Referring to FIG. 9, in this embodiment, the 12.5 Gb/s branch signals are pre-coded first, and then the coded data still at a rate of 12.5 Gb/s is obtained, and then an multiplexing process is performed for the 12.5 Gb/s coded data, so that the pre-coding portion may be realized by using the existing common low-speed parts.

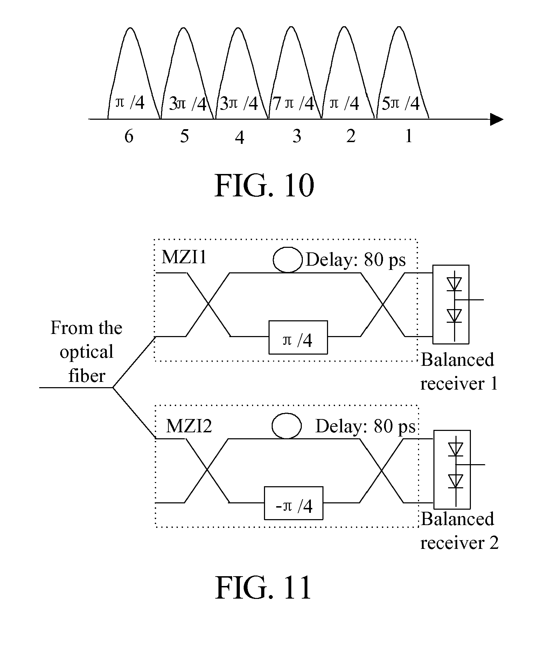

The transmitting end apparatus 801 according to the embodiment may use a plurality of modulators, such as a dual-parallel modulator, an electrical modulator, or an MZM. In the example of FIG. 9, non-adjacent RZ-DQPSK optical signals are obtained after the modulation performed by the dual-parallel modulator. The transmitting end apparatus 801 in this embodiment may specifically adopt an RZ pulse generating unit to convert the modulated signal into an optical pulse signal. For example, referring to FIG. 10, an RZ pulse generating unit converts the signal obtained after being modulated by the modulator in the transmitting end apparatus 801 into six optical pulse signals, of which the phases are respectively $5\pi/4$, $\pi/4$, $7\pi/4$, $3\pi/4$, $3\pi/4$, and $\pi/4$. When a four-branch multiplexer is used during pre-coding, the phase variation between two optical pulse signals with a sequence number difference there-between of 4 among the obtained optical pulse signals carries information of the transmitted signal, for example, the phase variation between the first optical pulse signal and the fifth optical pulse signal carries the first bit information of the transmitted signal, and the phase variation between the second optical pulse signal and the sixth optical pulse signal carries the second bit information of the transmitted signal, and so forth. Compared with the prior art, the phases of two optical pulse signals with a difference of a constant number of branches, instead of the phases of two adjacent optical pulse signals, are compared, where the difference of a constant number of branches equals to the number of branches multiplexed by the multiplexer in the transmitting end apparatus.

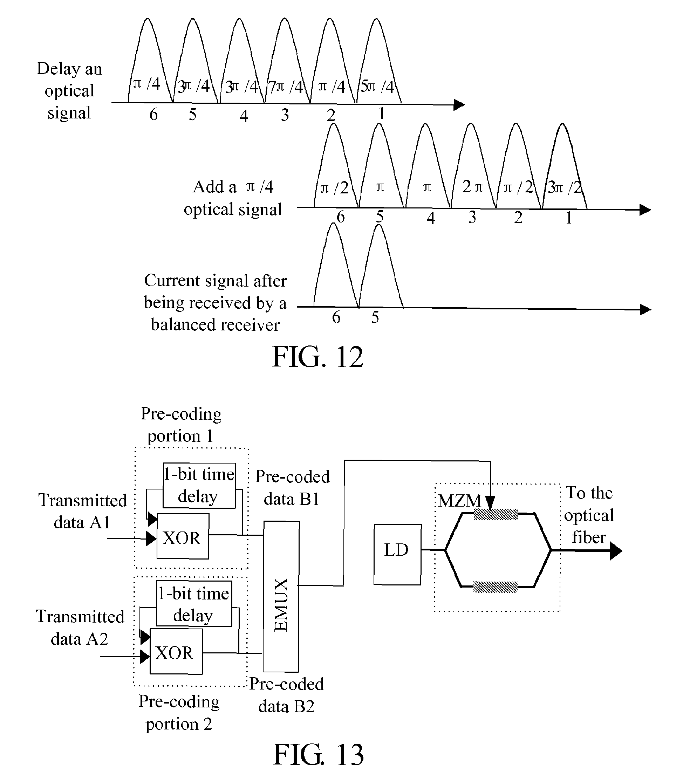

The receiving end apparatus 802 according to the embodiment is similar to the receiving end apparatus in the prior art, except the time delay for the demodulation. The time delay for the demodulation is a product of the number of branches multiplexed by the transmitting end apparatus 801 and an element period of the signal multiplexed by the transmitting end apparatus 801, which is longer than the time delay in the prior art and enlarges the time delay scope of the demodulator. For example, referring to FIG. 11, in the 100 Gb/s optical transmission system using the RZ-DQPSK optical modulation format, the number of branches multiplexed by the multiplexer in the transmitting end apparatus 801 is four, so that the time delay for the demodulation performed by the receiving end apparatus 802 is four times of the element period, i.e. 80 ps. The MZI1 and the MZI2 both delay the signal transmitted from the optical fiber for 80 ps, and respectively add $\pi/4$ and $-\pi/4$ signals to perform demodulation. The demodulated signals are respectively output to a balanced receiver 1 and a balanced receiver 2, thereby obtaining an electrical signal, and information of the transmitted signal can be obtained according to the level of the electrical signal, for example, a corresponding "low-high-high-low-high" level indicates a transmitted signal of "01101". For example, referring to FIG. 12, the MZI1 delays for 80 ps, and adds a $\pi/4$ signal to perform demodulation. The demodulated signal is output and is converted into an electrical signal by the balanced receiver 1, which is of a "high-high" level, so that the corresponding transmitted signal is "11" or "00".

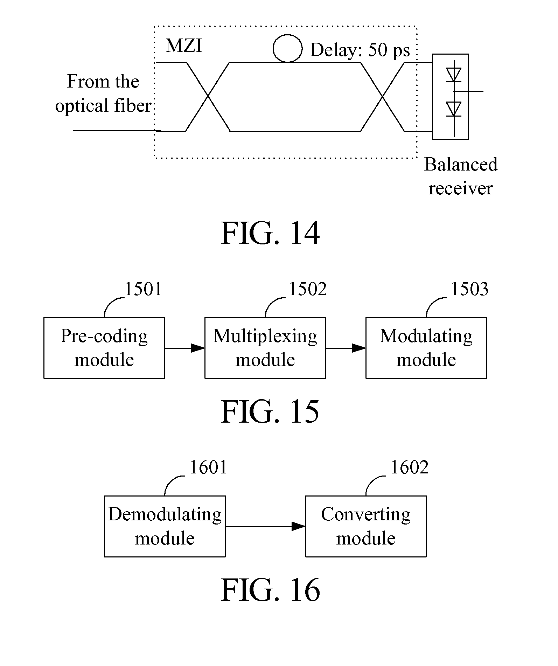

The optical transmission system according to the embodiment has been described by taking the 100 Gb/s optical transmission system using the RZ-DQPSK optical modulation format as an example. Additionally, the optical transmission system according to the embodiment may also use other optical modulation formats, such as DPSK optical modulation format. Illustrations are given as follows by taking a 40 Gb/s optical transmission system using a DPSK optical modulation format as an example. For example, referring to FIG. 13, the transmitting end has two channel data A1 and A2 to be transmitted, which are respectively input to a pre-coding portion 1 and a pre-coding portion 2 for being pre-coded. The pre-coding portion uses the XOR gate and a 1-bit delayer to respectively obtain pre-coded data B1 and B2. The B1 and B2 are loaded on the MZM after being multiplexed by the EMUX, and the MZM performs modulation to obtain non-adjacent DPSK optical signals and then outputs the non-adjacent DPSK optical signals to the optical fiber. Referring to FIG. 14, the receiving end uses the MZI to demodulate the signals transmitted from the optical fiber, and then the signals are converted into electrical signals by a balanced receiver. Since the number of branches multiplexed by the EMUX of the transmitting end apparatus is two, the time delay for the MZI is twice of the element period of the signal multiplexed by the transmitting end apparatus, that is, 50 ps in the 40 Gb/s optical transmission system.

In this embodiment, the transmitting end apparatus 801 performs pre-coding first and then performs multiplexing, and the receiving end performs demodulation by taking a product of the element period of the signal multiplexed by the transmitting end and the number of branches multiplexed by the transmitting end as a time delay. Thus, the existing low-speed parts are adopted to realize a high-speed pre-coding function in the high-speed optical transmission system, and an extended time delay is accordingly used during the demodulation. Such a solution reduces the difficulty and the cost to realize the system. The number of branches multiplexed by the transmitting end decides the time delay for demodulation performed by the receiving end and the low-speed rate after the branches are reduced. The rate of the branches is inversely proportional to the number of branches that are multiplexed, and the time delay for the demodulation is directly proportional to the number of branches that are multiplexed.

Embodiment 2

Referring to FIG. 15, in an embodiment, the present invention further provides an optical transmitting apparatus, which specifically includes a pre-coding module 1501, a multiplexing module 1502, and a modulating module 1503.

The pre-coding module 1501 is configured to pre-code a signal to be transmitted.

The multiplexing module 1502 is configured to multiplex data obtained by the pre-coding module 1501.

The modulating module 1503 is configured to modulate the signal multiplexed by the multiplexing module 1502 and output the modulated optical signal, where non-adjacent optical pulse signals in the modulated optical signal carry information of the signal to be transmitted, for example, a phase variation between non-adjacent optical pulse signals in the modulated optical signals carries information of the signal to be transmitted.

The pre-coding module 1501 specifically includes a pre-coding unit.

The pre-coding unit is configured to pre-code each branch signal of the signal to be transmitted and obtain multiple channel coded data, for example, the signal to be transmitted has ten branch signals, each of which is individually pre-coded, so as to obtain ten channel coded data.

The multiplexing module 1502 may be specifically an EMUX, and the number of branches for being multiplexed by the multiplexing module 1502 may be determined according to the actual situations.

The modulating module 1503 may specifically be a dual-parallel modulator, an electrical modulator, or an MZM.

The pre-coding module according to the embodiment may use a plurality of pre-coding rules during pre-coding. Since the pre-coding process is performed prior to the multiplexing process, the pre-coding module 1501 at the transmitting end apparatus according to the embodiment may use the existing common low-speed parts to realize the pre-coding function. The specific processes of pre-coding, multiplexing, modulating, and conversion into optical pulse signals are similar to that in the descriptions of Embodiment 1, which are not repeatedly described herein.

In this embodiment, as for the number of branches multiplexed by the multiplexing module 1502, the phase variation between two optical pulse signals with a sequence number difference there-between being equal to the above number among the optical pulse signals obtained by the optical transmitting apparatus carries information of the transmitted signal. For example, when the multiplexing module 1502 uses a four-branch multiplexer, the phase variation between two optical pulse signals with a sequence number difference there-between being 4 among the obtained optical pulse signals carries information of the transmitted signal. Compared with the prior art, the phases of two optical pulse signals with a difference of a constant number of branches, instead of the phases of two adjacent optical pulse signals, are compared, where the constant number of branches equals to the number of branches multiplexed by the transmitting end apparatus.

In this embodiment, the optical transmitting apparatus performs the pre-coding process prior to the multiplexing process, which ensures that existing low-speed parts are adopted to realize a high-speed pre-coding function in a high-speed optical transmission system, thereby reducing the difficulty to realize the system, and reducing the cost of the system.

Embodiment 3

Referring to FIG. 16, in an embodiment, the present invention further provides an optical receiving apparatus, which specifically includes a demodulating module 1601 and a converting module 1602.

The demodulating module 1601 is configured to demodulate an optical signal of a transmitted signal received by the optical receiving apparatus according to a preset time delay, where the preset time delay is a product of the number of branches multiplexed by a transmitting apparatus that sends the transmitted signal and an element period of the signal multiplexed by the transmitting apparatus.

The converting module 1602 is configured to convert the optical signal demodulated by the demodulating module 1601 into an electrical signal, and obtain information of the transmitted signal according to the electrical signal.

The demodulating module 1601 may specifically be an MZI, and the converting module 1602 may specifically be a receiver including a balanced receiver or a common PIN tube.

The optical receiving apparatus according to this embodiment is similar to the receiving end apparatus in the prior art, except the time delay for the demodulation. The time delay for the demodulation is a product of the number of branches multiplexed by the transmitting end apparatus and an element period of the signal multiplexed by the transmitting end apparatus, which is longer than the time delay in the prior art and enlarges the time delay scope of the demodulator. For example, in the 100 Gb/s optical transmission system using the RZ-DQPSK optical modulation format, if the number of branches multiplexed by a multiplexer in the transmitting end apparatus is 4, the time delay for the demodulation performed by the receiving end apparatus is four times of the element period, i.e. 80 ps.

The optical receiving apparatus according to this embodiment performs the demodulation by taking a product of the element period of the signal multiplexed by the transmitting end apparatus and the number of branches multiplexed by the transmitting end as a time delay, and an extended time delay is used in the demodulation, thereby reducing the difficulty to realize the system.

Embodiment 4

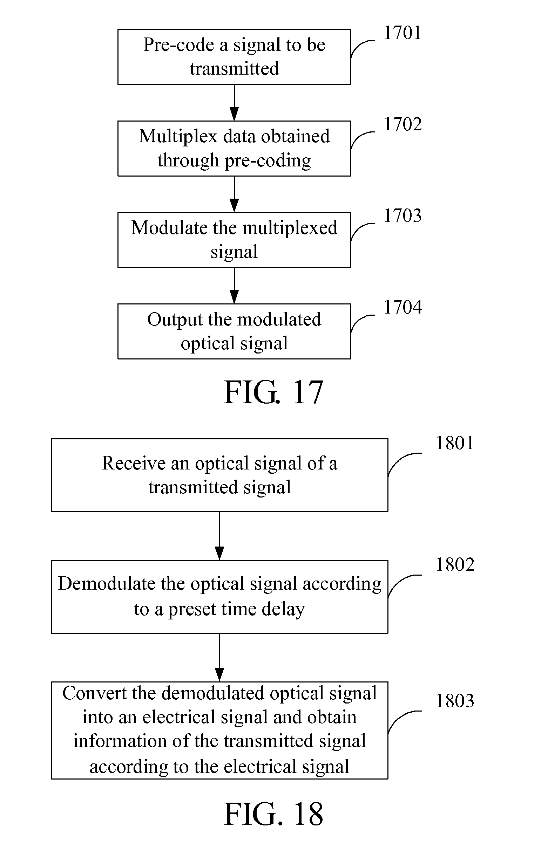

Referring to FIG. 17, in an embodiment, the present invention provides an optical transmitting method, which specifically includes the following steps.

In step 1701, a signal to be transmitted is pre-coded, where the pre-coding process may adopt the existing pre-coding rules, and the pre-coding process may specifically include pre-coding each branch signal of the signal to be transmitted respectively and obtaining multiple channel coded data.

In step 1702, data obtained through pre-coding is multiplexed. Specifically, the multiple channel coded data obtained through pre-coding may be multiplexed, for example, an EMUX is configured to multiplex four channel 12.5 Gb/s coded data to obtain one channel 50 Gb/s signal.

In step 1703, the multiplexed signal is modulated, where the modulation may be realized by using various modulators, such as a dual-parallel modulator, an electrical modulator, or an MZM.

In step 1704, the modulated optical signal is output to an optical fiber, and is transmitted to a receiving end by the optical fiber. Furthermore, an RZ pulse generating unit may also be adopted to convert the modulated optical signal into an RZ optical pulse signal, where non-adjacent optical pulse signals in the modulated optical signal carry information of the signal to be transmitted, for example, a phase variation between non-adjacent optical pulse signals of the modulated optical signal carries information of the signal to be transmitted.

Since the pre-coding process is performed prior to the multiplexing process, the pre-coding process in this embodiment can be realized by using the existing common low-speed parts.

In this embodiment, the transmitting end performs the pre-coding process prior to the multiplexing process, which ensures that existing low-speed parts are adopted to realize a high-speed pre-coding function in a high-speed optical transmission system, thereby reducing the difficulty to realize the system, and reducing the cost of the system.

Embodiment 5

Referring to FIG. 18, in an embodiment, the present invention provides an optical receiving method, which specifically includes the following steps.

In step 1801, an optical signal of a transmitted signal is received, where the optical signal carries information of the signal to be transmitted from the transmitting end.

In step 1802, the received optical signal is demodulated according to a preset time delay, for example, by using the MZI, where the preset time delay is a product of the number of branches multiplexed by the transmitting end apparatus that sends the transmitted signal and an element period of the signal multiplexed by the transmitting end apparatus. For example, if the number of branches multiplexed in the 100 Gb/s system is 2, and the element period of the multiplexed signal is 20 ps, the time delay for the demodulation performed by the receiving end is twice of the element period, i.e. 40 ps.

In step 1803, the demodulated optical signal is converted into an electrical signal, for example, by using a balanced receiver, and then information of the signal to be transmitted is obtained according to the electrical signal.

In this embodiment, when the optical pulse signal is received, the demodulation is performed by taking a product of the element period of the signal multiplexed by the transmitting end and the number of branches multiplexed by the transmitting end as a time delay, and an extended time delay is used in the demodulation, thereby reducing the difficulty to realize the system.

The embodiments of the present invention may be accomplished by software, and the corresponding software may be stored in a readable storage medium, such as in a hard disk of an optical transmitting apparatus or a hard disk of an optical receiving apparatus.

The above descriptions are merely preferable embodiments of the present invention, but not intended to limit the present invention. Any modification, equivalent replacement, and improvement made without departing from the spirit and principle of the present invention fall within the protection scope of the present invention.

**Claims**

1. An optical transmission system, comprising:

   a transmitting end apparatus, configured to pre-code a signal to be transmitted, multiplex data obtained through pre-coding, modulate a multiplexed signal, and output a modulated optical signal, wherein non-adjacent optical pulse signals in the modulated optical signal carry information of the signal to be transmitted; and
   a receiving end apparatus, configured to receive an optical signal output by the transmitting end apparatus, demodulate the optical signal according to a preset time delay, convert the demodulated optical signal into an electrical signal, and obtain the information of the signal to be transmitted according to the electrical signal, wherein the preset time delay is a product of a number of branches multiplexed by the transmitting end apparatus and an element period of a signal multiplexed by the transmitting end apparatus.

2. The optical transmission system according to claim 1, wherein the transmitting end apparatus further comprises:

   a pre-coding module, configured to respectively pre-code each branch signal of the signal to be transmitted and obtain multiple channel coded data;
   a multiplexing module, configured to multiplex the multiple channel coded data obtained by the pre-coding module; and
   a modulating module, configured to modulate a signal multiplexed by the multiplexing module and output the modulated optical signal, wherein non-adjacent optical pulse signals in the modulated optical signal carry the information of the signal to be transmitted.

3. An optical transmitting apparatus, comprising:

   a pre-coding module, configured to pre-code a signal to be transmitted;
   a multiplexing module, configured to multiplex data obtained by the pre-coding module; and
   a modulating module, configured to modulate a signal multiplexed by the multiplexing module and output a modulated optical signal, wherein non-adjacent optical pulse signals in the modulated optical signal carry information of the signal to be transmitted.

4. The optical transmitting apparatus according to claim 3, wherein the pre-coding module further comprises:

   a pre-coding unit, configured to respectively pre-code each branch signal of the signal to be transmitted and obtain multiple channel coded data.

5. The optical transmitting apparatus according to claim 3, wherein the multiplexing module is an electrical multiplexer (EMUX).

6. The optical transmitting apparatus according to claim 3, wherein the modulating module is a dual-parallel modulator, an electrical modulator, or a Mach-Zender modulator (MZM).

7. An optical receiving apparatus, comprising:

a demodulating module, configured to demodulate an optical signal of a transmitted signal received by the apparatus according to a preset time delay, wherein the preset time delay is a product of a number of branches multiplexed by a transmitting apparatus that sends the transmitted signal and an element period of a signal multiplexed by the transmitting apparatus; and

a converting module, configured to convert the optical signal demodulated by the demodulating module into an electrical signal and obtain information of the transmitted signal according to the electrical signal.

8. The optical receiving apparatus according to claim 7, wherein the demodulating module is a Mach-Zender interferometer (MZI).

9. The optical receiving apparatus according to claim 7, wherein the converting module is a receiver.

10. An optical transmitting method, comprising:

pre-coding a signal to be transmitted, and then multiplexing data obtained through pre-coding; and modulating a multiplexed signal and outputting a modulated optical signal, wherein non-adjacent optical pulse signals in the modulated optical signal carry information of the signal to be transmitted.

11. The optical transmitting method according to claim 10, wherein the pre-coding the signal to be transmitted and then multiplexing the data obtained through pre-coding further comprises:

pre-coding each branch signal of the signal to be transmitted respectively to obtain multiple channel coded data; and

multiplexing the multiple channel coded data.

12. An optical receiving method, comprising:

receiving an optical signal of a transmitted signal;

demodulating the optical signal according to a preset time delay, wherein the preset time delay is a product of a number of branches multiplexed by a transmitting apparatus that sends the optical signal and an element period of a signal multiplexed by the transmitting apparatus; and

converting the demodulated optical signal into an electrical signal, and obtaining information of the transmitted signal according to the electrical signal.

FIG. 1

FIG. 2

FIG. 3

FIG. 4

Delay an
optical signal

Add a π /4
optical
signal

Current signal
after being
received by a
balanced receiver

FIG. 5

Transmitted
data A

1-bit time
delay

XOR

Pre-coding
portion

Pre-coded
data B

LD

MZM

To the
optical
fiber

FIG. 6

MZI    ◯ Delay: 25ps

From the optical fiber

Balanced receiver

FIG. 7

801    802

Transmitting end apparatus → Receiving end apparatus

FIG. 8

$U_1$ 12.5Gb/s
$U_2$
$U_3$
$U_4$

1-bit time delay

Pre-code

1-bit time delay

12.5Gb/s $I_1'$
$I_2'$
$I_3'$
$I_4'$

EMUX

50Gb/s → $I'$

$V_1$ 12.5Gb/s
$V_2$
$V_3$
$V_4$

12.5Gb/s $Q_1'$
$Q_2'$
$Q_3'$
$Q_4'$

EMUX

50Gb/s $Q'$

FIG. 9

FIG. 10

FIG. 11

Delay an
optical
signal

$\pi/4$  $3\pi/4$  $3\pi/4$  $7\pi/4$  $\pi/4$  $5\pi/4$

6  5  4  3  2  1

Add a $\pi/4$
optical signal

$\pi/2$  $\pi$  $\pi$  $2\pi$  $\pi/2$  $3\pi/2$

6  5  4  3  2  1

Current signal after
being received by a
balanced receiver

6  5

FIG. 12

Pre-coding
portion 1

1-bit time
delay

Transmitted
data A1

XOR

Pre-coded
data B1

Transmitted
data A2

1-bit time
delay

XOR

EMUX

LD

MZM

To the
optical
fiber

Pre-coded
data B2

Pre-coding
portion 2

FIG. 13

MZI ◯ Delay: 50 ps

From the
optical fiber

Balanced
receiver

FIG. 14

1501

Pre-coding
module

1502

Multiplexing
module

1503

Modulating
module

FIG. 15

1601

Demodulating
module

1602

Converting
module

FIG. 16

Pre-code a signal to be transmitted — 1701

↓

Multiplex data obtained through pre-coding — 1702

↓

Modulate the multiplexed signal — 1703

↓

Output the modulated optical signal — 1704

FIG. 17

Receive an optical signal of a transmitted signal — 1801

↓

Demodulate the optical signal according to a preset time delay — 1802

↓

Convert the demodulated optical signal into an electrical signal and obtain information of the transmitted signal according to the electrical signal — 1803

FIG. 18

| INTERNATIONAL SEARCH REPORT | International application No. |
|---|---|
| | PCT/CN2008/073403 |

**A. CLASSIFICATION OF SUBJECT MATTER**

### H04B 10/02 (2006.01) i

According to International Patent Classification (IPC) or to both national classification and IPC

**B. FIELDS SEARCHED**

Minimum documentation searched (classification system followed by classification symbols)

### IPC: H04B, G02F

Documentation searched other than minimum documentation to the extent that such documents are included in the fields searched

Electronic data base consulted during the international search (name of data base and, where practicable, search terms used)

WPI,EPODOC,PAJ, CPRS,CNKI: OPTIC, OPTICAL, LIGHT, PRECOD+, MULTIPLEX+, +MODULAT+, TIME

**C. DOCUMENTS CONSIDERED TO BE RELEVANT**

| Category* | Citation of document, with indication, where appropriate, of the relevant passages | Relevant to claim No. |
|---|---|---|
| X | CN1601932A (SAMSUNG ELECTRONICS CO LTD) 30 Mar.2005 (30.03.2005) Description page 2 lines 18-21, pages 4-6, figures 1-10 | 1-12 |
| A | EP1830531A1 (NIPPON TELEGRAPH & TELEPHONE CORP) 05 Sep.2007 (05.09.2007) See the whole document | 1-12 |
| A | US2005069331A1 (SAMSUNG ELECTRONICS CO LTD et al) 31 Mar.2005 (31.03.2005) See the whole document | 1-12 |

☒ Further documents are listed in the continuation of Box C.     ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 25 Feb. 2009(25.02.2009) | **19 Mar. 2009 (19.03.2009)** |

| Name and mailing address of the ISA/CN | Authorized officer |
|---|---|
| The State Intellectual Property Office, the P.R.China 6 Xitucheng Rd., Jimen Bridge, Haidian District, Beijing, China 100088 Facsimile No. 86-10-62019451 | YE Jian Telephone No. (86-10)62411445 |

Form PCT/ISA/210 (second sheet) (April 2007)

## INTERNATIONAL SEARCH REPORT

| International application No. |
| --- |
| PCT/CN2008/073403 |

C (Continuation).　　DOCUMENTS CONSIDERED TO BE RELEVANT

| Category* | Citation of document, with indication, where appropriate, of the relevant passages | Relevant to claim No. |
| --- | --- | --- |
| A | CN1254995A (FUJISU LTD) 31 May 2000 (31.05.2000) See the whole document | 1-12 |
| A | CN1394005A (NIPPON TELEGRAPH & TELEPHONE) 29 Jan.2003 (29.01.2003) See the whole document | 1-12 |

Form PCT/ISA/210 (continuation of second sheet ) (April 2007)

## INTERNATIONAL SEARCH REPORT
### Information on patent family members

| International application No. |
| --- |
| PCT/CN2008/073403 |

| Patent Documents referred in the Report | Publication Date | Patent Family | Publication Date |
| --- | --- | --- | --- |
| CN1601932A | 30.03.2005 | US2005068209A1 | 31.03.2005 |
| | | JP2005102221A | 14.04.2005 |
| | | KR20050030655A | 31.03.2005 |
| | | US7193539B2 | 20.03.2007 |
| | | KR100593998B1 | 03.07.2006 |
| EP1830531A1 | 05.09.2007 | EP1830532A1 | 05.09.2007 |
| | | EP1026863A2 | 09.08.2000 |
| | | US6934308B1 | 23.08.2005 |
| | | JP2000224244A | 11.08.2000 |
| | | JP3474794B2 | 08.12.2003 |
| US2005069331A1 | 31.03.2005 | KR20050031666A | 06.04.2005 |
| | | KR100520623B | 10.10.2005 |
| CN1254995A | 31.05.2000 | EP1005201A2 | 31.05.2000 |
| | | US6595707B1 | 22.07.2003 |
| | | JP2000165246A | 16.06.2000 |
| | | CN1177418C | 24.11.2004 |
| | | JP4141028B2 | 27.08.2008 |
| CN1394005A | 29.01.2003 | CN1328862C | 25.07.2007 |
| | | CN101064567A | 31.10.2007 |
| | | US7116917B2 | 03.10.2006 |
| | | JP2003087201A | 20.03.2003 |
| | | US2003002121A1 | 02.01.2003 |
| | | EP1271808A2 | 02.01.2003 |

Form PCT/ISA/210 (patent family annex) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200710160976